# EUROPEAN PATENT SPECIFICATION

(11) **EP 2 981 171 B1**
(45) Date of publication and mention of the grant of the patent: **02.10.2019**
(21) Application number: 14714743.3
(22) Date of filing: 03.04.2014
(51) Int. Cl.: A22C 7/00

(54) **KNOCK-OUT UNIT**
KNOCK-OUT-EINHEIT
UNITÉ D'ÉJECTION

(30) Priority: 03.04.2013 EP 13162112
(43) Date of publication of application: 10.02.2016
(73) Proprietor: GEA Food Solutions Bakel B.V., 5761 EN Bakel (NL)
(72) Inventor: FABER, Peter, 5807 WB Helmond (NL); VAN DE MEULENGRAAF, Michel, 5735 CR Aarle-Rixtel (NL)
(74) Representative: Kutzenberger Wolff & Partner
(86) International application number: PCT/EP2014/056718
(87) International publication number: WO 2014/161947

(56) References cited:
- EP-A1- 2 140 767
- WO-A2-2008/091949

## Description

The present invention relates to a knock-out unit with at least one knock-out cup, which is connected to a base. The present invention further relates to a method to clean a knock-out unit, which comprises a base and at least one knock-out cup.

Such knock-out cups are well known in the state of art and are used to remove formed food products, for example hamburger patties, from forming plates. These forming plates reciprocate from a filling to a discharge position and vice versa. However, the knock-out cups according to the state of the art have significant hygienic problems, because it is very time-consuming to clean these knock-out units.

European patent publication EP 2 140 767 A1 describes a food product forming apparatus comprising at least one knock-out cup which has a permeable bottom through which a cleaning fluid can be ejected.

It was therefore the objective of the present invention to provide a knock-out cup that does not comprise the deficiencies according to the state of the art. Another objective of the present invention is to provide a method to easily clean a knock-out unit.

The problem is solved with a knock-out unit with a multitude of knock-out cups, which are connected to a base, wherein the knock-out unit comprises a fluid supply for a cleaning fluid and means to guide the cleaning fluid to and through the knock-out cups.

The present invention relates to a knock-out unit to remove formed food products, particularly minced meat, from a forming plate, which is preferably reciprocated linearly between a filling and a discharge position. However, the knock-out unit can also be combined with a rotating forming drum. The inventive knock-out unit comprises a base, preferably a plate, and at least one, preferably a multitude of knock-out cups, which are, preferably releasable, connected to the base. The knock-out unit is preferably moved from a remote to a discharge position, in which the knock-out cup touches the product and pushes it out of the forming plate or forming drum. The ejection can be supported by the discharge of air and/or water which comes out of the forming cup, respectively.

According to the present invention, the knock-out unit now comprises a fluid supply, for example a hose or a pipe connected to the knock-out unit, for a cleaning fluid and means to guide this cleaning fluid to and through each knock-out cup. This allows to clean the knock-out unit without disassembling it. The inventive knock-out unit is much more hygienic than knock-out units according to the state of the art. The knock-out unit can be cleaned easily and without disassembling it. Thus, time is saved and malfunctioning due to assembly errors is avoided.

Preferably, the supply for the cleaning fluid can also be utilized to guide a fluid, e.g. water to the knock-out cups to improve the removal of the food products from the form member, particularly to reduce adhesion forces between the knock-out cup and the food product.

According to the present invention, the base comprises at least one fluid channel to guide the cleaning fluid from the supply to the knock-out cups. This channel preferably comprises one or more main channels and branches which extend from the main channel to each knock-out cup. Each channel comprises at least partially rounded edges and/or no blind hole in order to avoid accumulation of debris in the channel. In a preferred embodiment, the channel is a channel that is open along one axial extension, so that the channel can be inspected easily, preferably after the knock-out unit has been disassembled.

According to the invention the knock-out unit comprises a gas supply, preferably an air supply, particularly to improve the removal of the food products and/or to improve the cleaning of the knock-out cups. The base comprises a guiding means, here a channel, which guides the gas from the supply, for example a hose or a pipe connected to the knock-out unit, to each knock-out cup. According to the invention the channel for the gas is at least partially separated from the fluid channel and the gas and the fluid flow are combined in a mixing zone which is located upstream from the knock-out cups.

According to the innvention the knock-out unit comprises a cover plate which covers the axial extending opening of the at least one fluid channel. This cover preferably allows the separation of the gas and the fluid flow until they are mixed in the mixing zone. Preferably, a seal is provided between the base and the cover and/or between the cover and the frame. The seal is preferably an O-ring.

According to a preferred or inventive embodiment, the knock-out unit comprises a frame, wherein the base is slid into the frame.

Preferably, the frame is a plate, which is U-shaped at two opposite ends. The Us of the frame hold the base.

Preferably, the frame comprises fastening means which fasten, preferably clamp, the base to the frame, more preferably without tools. The fastening means can be, for example, an excentric connector. In case, the knock-out unit comprises a cover means, the fastening means preferably press the base against the cover means and the cover means against the frame.

Preferably, the knock-out cups are fastened to the base by means which can be fastened and/or released without tools, particularly which need not be turned for fastening and/or release, for example, a clip, even more preferably, a spring clip means, which tensions the knock-out cup against the base. The clip preferably lies against the cover means.

Preferably, the fluid and/or gas supply is connected to the frame.

In a preferred embodiment, the frame and the base comprises form fit means, respectively to avoid disorientation of the base relative to the frame. In case the two corresponding form fit means are not fitted correctly, for example, the knock-out unit cannot be connected to the corresponding forming machine.

Another subject matter of the present invention is a method to clean a knock-out unit as defined in claim 1.

The disclosure made regarding the inventive knock-out unit also applies to the inventive method and vice versa.

Preferably, the cleaning fluid is mixed with a gas, preferably to produce foam. The mixing of the cleaning fluid and the gas preferably takes place in a mixing zone, which is upstream from the knock-out cup.

The knock-out cup preferably comprises a gap through which the cleaning fluid is forced. From the knock-out cup, the cleaning fluid is discharged and preferably collected and recycled. Prior to feeding it again to a knock-out unit, the cleaning fluid is preferably filtered.

The cleaning fluid can be heated and preferably comprises cleaning detergents. After the cleaning, the knock-out unit is preferably rinsed with water and more preferably at least partially dried.

The inventions are now explained according to the figures. These explanations do not limit the scope of protection. The explanations apply for all embodiments of the present invention likewise.
- **Figure 1**: shows the inventive knock-out unit.
- **Figure 2**: shows an exploded view of the knock-out unit according to figure 1.
- **Figure 3**: shows a cut through the knock-out unit according to figures 1 and 2.
- **Figure 4**: shows another exploded view of the knock-out unit according to figures 1 to 3.
- **Figure 5**: shows the outer member of the knock-out cup.
- **Figure 6**: shows details of the base.
- **Figure 7**: shows a cleaning unit.
- **Figures 8 -12**: show yet another embodiment of the knock-out unit.
- **Figure 13**: shows a plug.
- **Figures 14 -17**: show yet another embodiment of the knock-out unit.
- **Figure 17**: shows the inventive cleaning method.

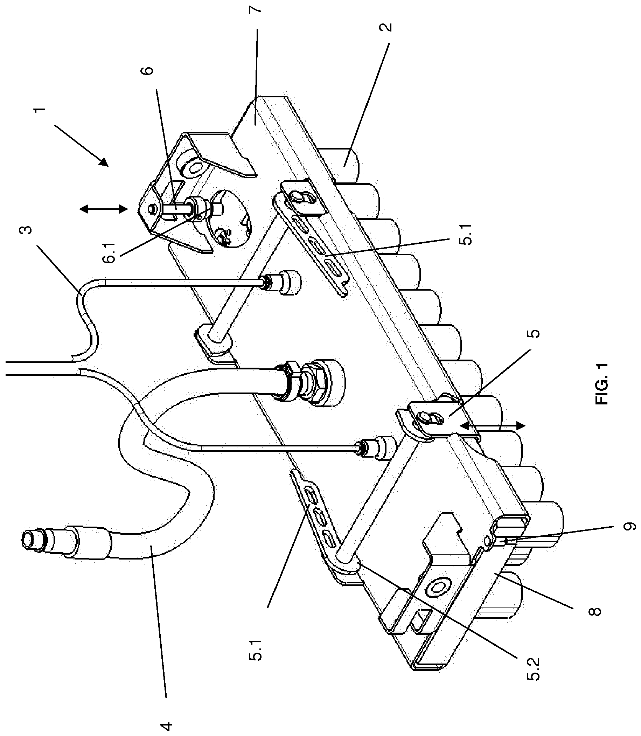

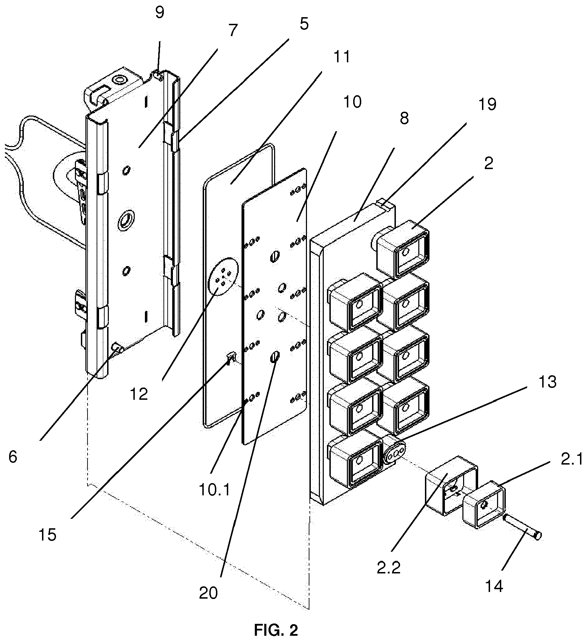

Figure 1 shows the inventive knock-out unit 1 which comprises a frame 7 and base 8, here a plate 8. The frame 7 is preferably a plate with two opposite U-shaped ends. The base 8 can be slid into the frame 7 and is held by the two Us. Preferably, the frame 7 comprises locking means 5, which can be moved in two opposite directions, here upwards and downwards, as depicted by the double arrow, e.g. driven by an excentric connector 5.2 and thereby clamp the base 8 at the frame 7. Preferably, the frame comprises a form-fit means 9, here a pin, and a corresponding form-fit means 19 (please compare figure 2) is provided in the base. In an assembled state, the form-fit means 9, here the pin, must be at least partially inserted into the form fit means of the base, here a groove 19, for a correct assembly of the base in the frame. Furthermore, the frame comprises a safety means 6, here a safety pin, which comprises a cam 6.1, which is during insertion of the base in contact with the base so that the pin is moved from its remote into an extended position when the base is inserted into the frame and is maintained in the extended position as long as the base is in contact with the safety means 6. Only when the pin 9 is at least partially inserted into groove 19, the base can be moved sufficiently far into the frame so that its rear opposite end of the base moves past the cam 6.1 and the safety pin, which is for example, spring loaded moves back into its remote position. In case the safety means is not in its remote position, i.e. the base is not correctly inserted into the frame, the knock-out unit 1 cannot be correctly connected to the corresponding machine. Preferably, a liquid supply 3 and/or gas supply 4 are provided at the knock-out unit, preferably at its frame. In the present case, the fluid supply 3 comprises two insertions points. However, the person skilled in the art understands that there can be more or less connection points to the knock-out unit. The gas, preferably air, is provided by one hose. However, multiple connections are also possible.

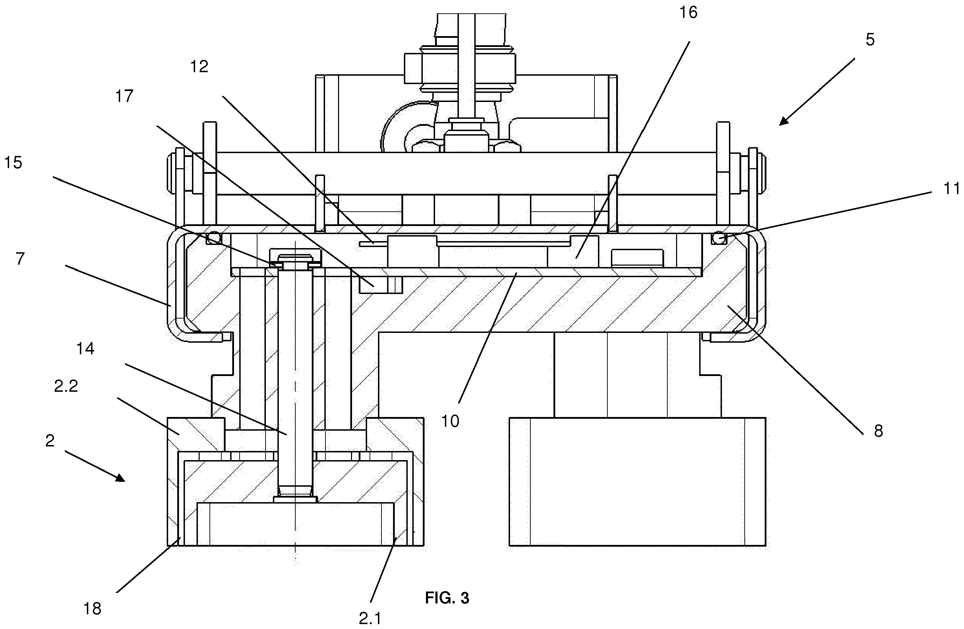

As can be particularly seen from figure 2, the knock-out unit 1 comprises a multitude of knock-out cups 2 which are connected to the base 8, here via a stamp 13. In the present case, the connection is utilized by a pin 14, which extends through the knock-out cup and the base 8 and which is fastened to the base by a clip 15, in the present case a spring clip 15. In the present case, each knock-out cup comprises an inner member 2.1, which is provided inside an outer member 2.2. Between the two members, there is preferably a gap 18, through which a gas, a liquid and/or a cleaning liquid can be forced, as can be seen particularly in figure 3. In each stamp at least a channel for a gas and/or a liquid is provided. Preferably, the channel connects the mixing zone 22 or the channel 17 and the gap 18. Figure 3 also depicts that between the frame 7 and the base 8 a seal, preferably an O-ring, is provided.

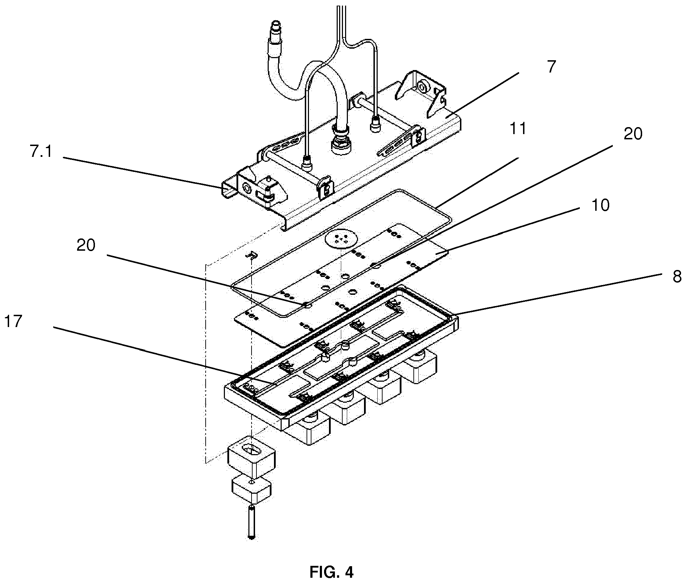

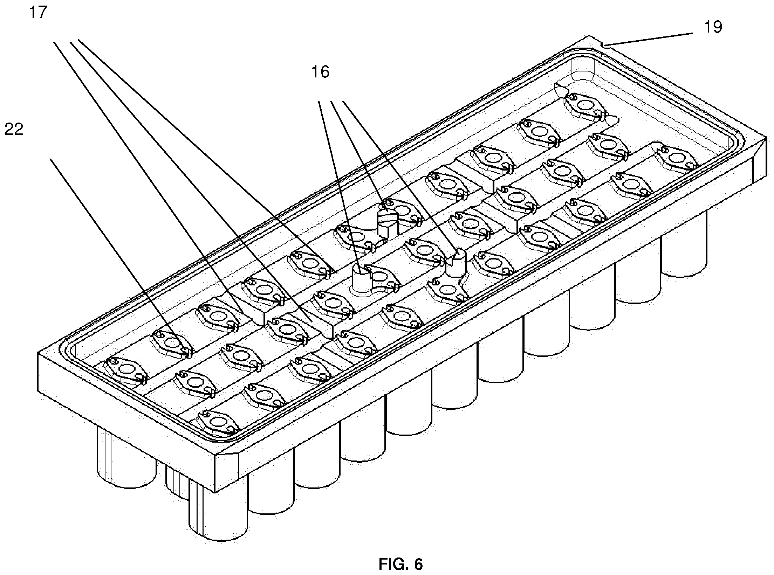

Reference is now made to figure 4 which shows another exploded view of the inventive knock-out unit. Preferably, the base comprises fluid distribution means 17, here a channel, which connects the fluid supply 3 and each knock-out cup 2. In the present case, the distribution means comprise two main channels, which extend parallel to the longer axial extension of the base. A branch connects the main channel with the fluid inlet of the knock-out cups. However, as can be seen from figure 6, the knock-out cup can be directly connected to the main channel without a branch. Preferably, two main channels are connected by a branch. The channels are open at the top, so that they can be inspected easily in case the knock-out unit is disassembled. In the present case, the channels are covered with cover means, here a cover plate 10. This cover means comprises here two openings 20, through which the liquid flows into the channel 17. Furthermore, the cover plate 10 comprises openings, here three openings, through which, as can be seen from figure 3, positioning means 16 extend, which support a distribution member 12 for the gas. In the present case, the distribution member is a gas diffusion plate that distributes the incoming gas over the cover plate. Furthermore, the cover plate comprises at least one opening per knock-out cup to allow gas flow through the cover plate into each knock-out cup, in order to improve the release of the formed product and/or in order to improve the cleaning of the knock-out cups. In the present case, there are two openings per knock-out cup 2. Each opening for the gas in the cover member 10 is preferably adjacent to a gas/liquid mixing zone 22, in which the gas and the liquid are mixed.

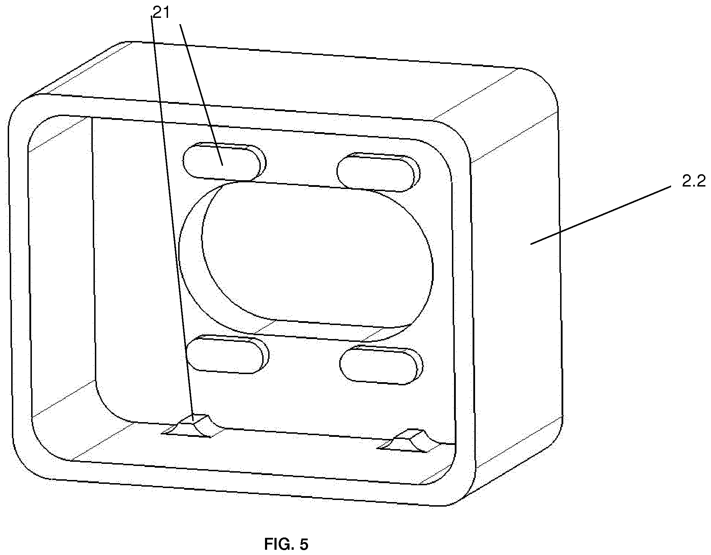

Figure 5 shows details of the outer member of the knock-out cup. At the inside of the outer member positioning means 21 is provided, in order to position the inner member relative to the outer member, particularly in order to get a gap 18, that preferably extends around the entire inner member.

Figure 6 shows a preferred embodiment of the present invention. In the present case, there are mixing zones 22, in which the fluid flow can be mixed with gas, e.g. in order to improve the discharge of the formed product and/or in order to improve the cleaning of the knock-out cups, e.g. by producing a foam. As can be further seen from figure 6, the channels 17 have rounded edges and no dead ends, in order to assure that no debris can accumulate in the channels and that all debris is washed out of the channels during cleaning. In the present case, the stamps a rhomb-shaped.

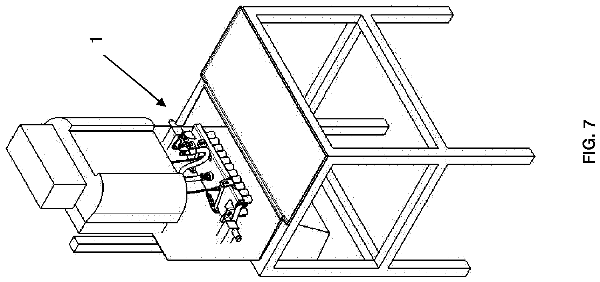

Figure 7 shows a cleaning unit for the knock-out unit 1. For cleaning, the knock-out unit does not need to be disassembled, but can be in its entirety connected to the cleaning unit. In the present case, the cleaning unit comprises a gas and/or a fluid cleaning supply, which is connected to the cleaning unit. The cleaning can be executed by forcing the cleaning fluid through the supply, the channels and then into each knock-out cup. After the cleaning fluid leaves the knock-out cup, it is collected and can be recycled. Prior to or during recycling, the cleaning fluid is preferably filtered. The cleaning fluid can be heated and is preferably water-mixed with a chemical cleaning agent. The cleaning can be supported by the supply of gas, preferably air. The gas is preferably mixed with the fluid in a mixing zone, which is more preferably directly adjacent to the knock-out cup and/or its stamp. During mixing, preferably foam is generated, which improves the cleaning of the knock-out cup. After the cleaning, the knock-out unit is preferably rinsed with clear water and/or dried and can subsequently in its entirety be connected again to the knock-out machine. Due to the cleaning without disassembling the knock-out unit, the cleaning is greatly simplified and less time is needed for cleaning.

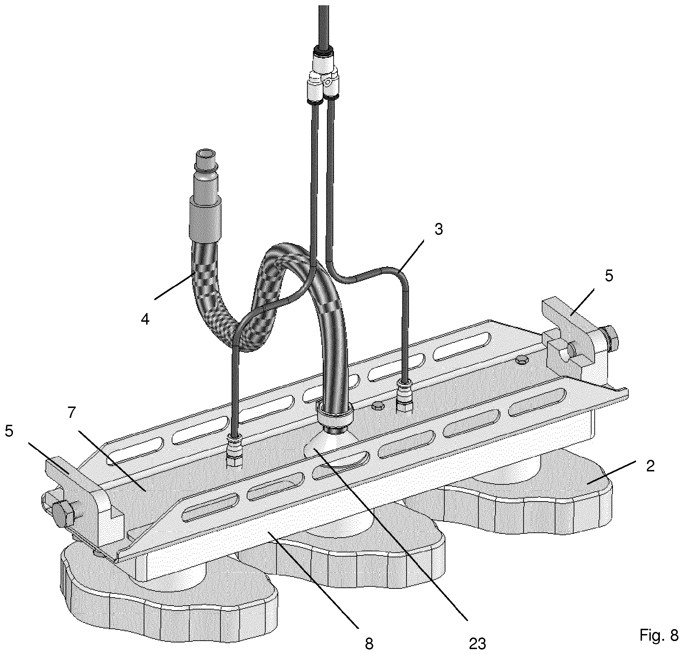

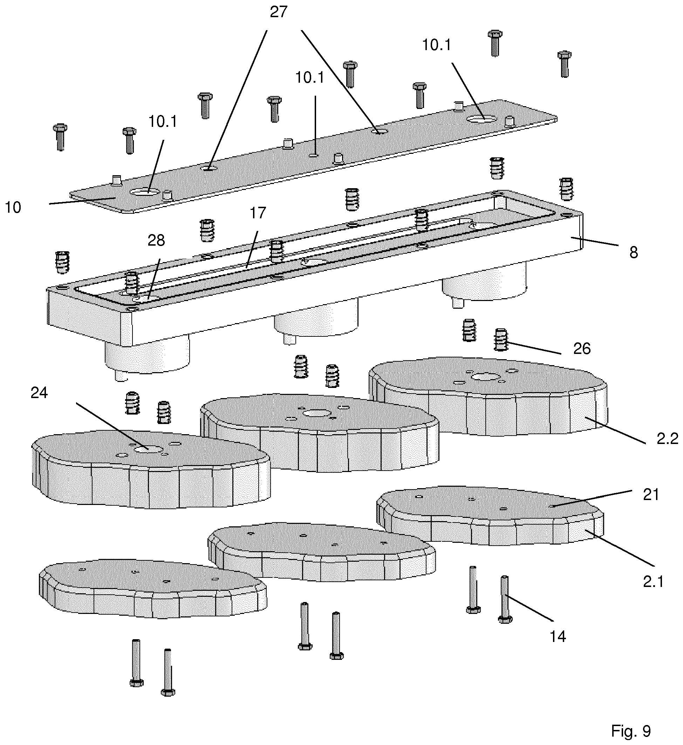

Figures 8 - 12 show yet another embodiment of the inventive knock-out unit. This knock-out unit comprises a frame 7 to which locking/lifting means 5 are attached and which comprises connection means to a liquid supply 3 and a gas supply 4. The gas supply is utilized to eject the formed products from the knock out cup 2. The fluid supply is mainly needed for cleaning purposes. To the bottom of the frame a base 8 is connected to which the knock-out cups 2 are attached. As can be seen from figure 9, in the present case, the inner members 2.1 of the knock-out cup 2 are attached to the outer member 2.2 of the knock-out cup by fixation means 14, here screws. The outer member 2.2 itself is connected to the base by fixation means 26, here screws. The base plate 8 comprises on the side which is opposite of the knock-out cup cover means 10, which are connected to the base again by fixation means, here screws. This cover plate 10 comprises air inlet means 27 and distribution means 10.1 for the gas which is supplied to the base plate. The distribution means 10.1 directly below the inlet of the gas comprises a smaller diameter than the distribution means 10.1 to the left end to the right in order to more or less equally distribute the gas supply over the entire length of the base. Furthermore, the base comprises a channel 17 that guides the liquid from the inlet 27 to channels 28 which lead the liquid to the knock-out cups, respectively. The person skilled in the art understands that the liquid can also flow the other way round. Preferably during cleaning, the air and the cleaning fluid are mixed to produce a cleaning foam.

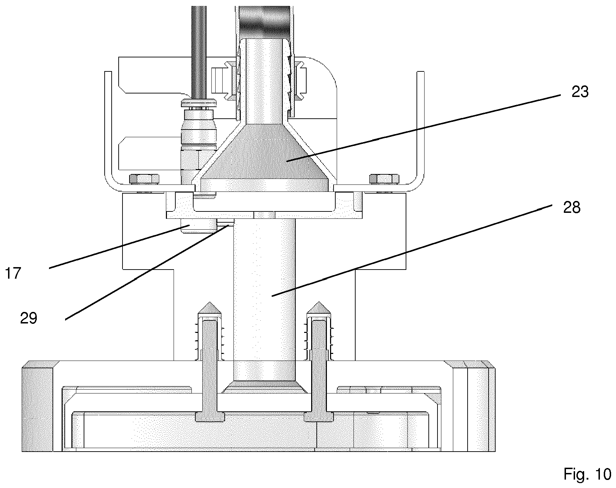

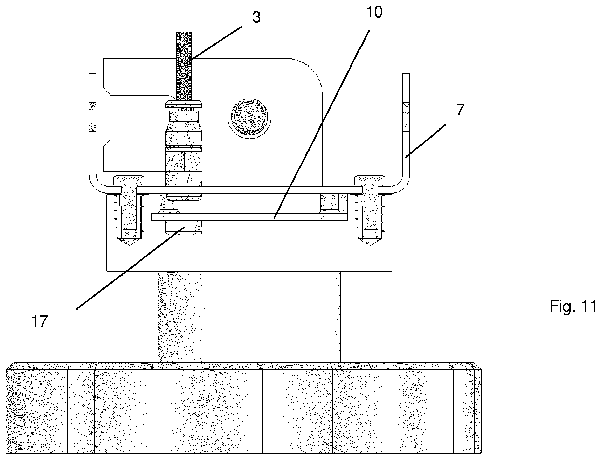

Further details of the inventive knock-out cup are shown in figures 10 and 11. It can be particularly seen that the gas inlet comprises a funnel to better distribute the gas along the base. Furthermore, the connection 29 between channel 17 and channel 28 can be seen which guide the liquid to the knock-out cup, respectively. Figure 11 shows further details about the supply of liquid, particularly cleaning liquid, which flows via hose 3 through the frame 7 into the base and is there distributed by distribution plate 10 and then flows into channel 17 and from there into the channels 28.

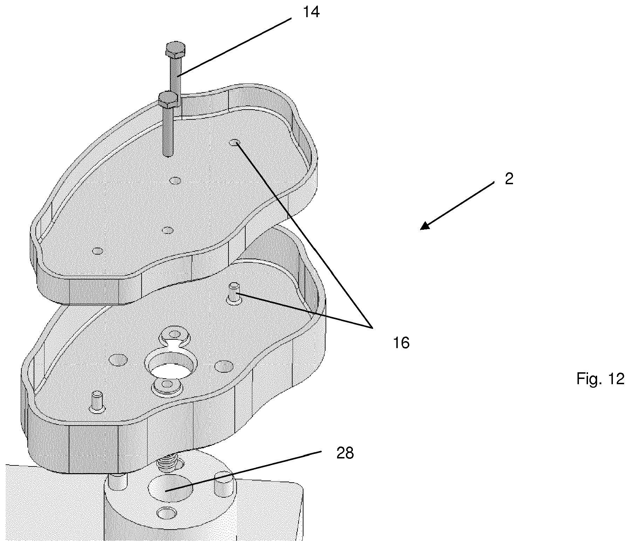

Figure 12 shows a connection of the knock-out cup 2 to the base which is in the present case carried out by screws 14. The position of the inner and outer member is secured by positioning means 16.

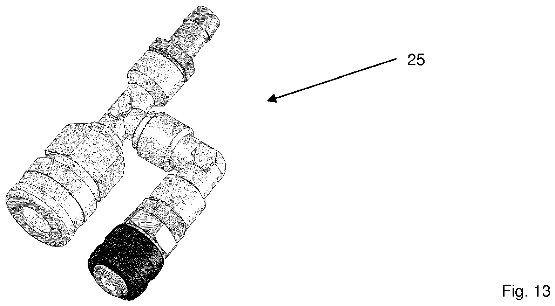

Figure 13 shows a plug 25 which functions as an adapter and allows the connection of the hose 3 and hose 4 to one single fluid source, particularly a cleaning fluid source or to one air supply.

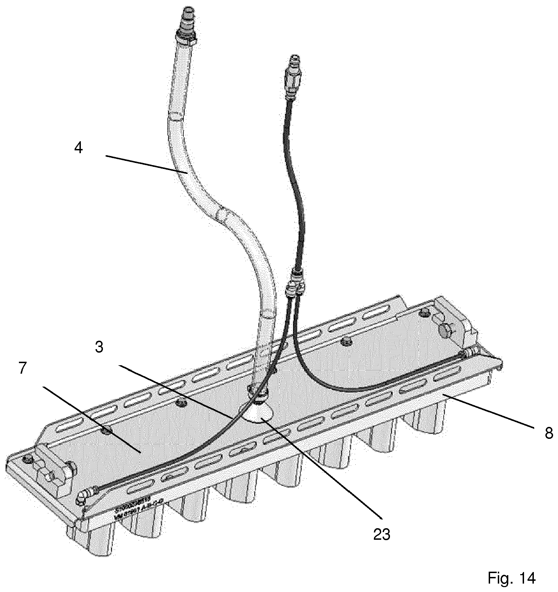

Figures 14 - 16 show another embodiment of the inventive knock-out unit. In principle reference can be made to the description of the embodiment shown above, particularly Figure 8 - 12. In the present case, however, the fluid inlet is preferably placed on the left hand and right hand side of the base 8 as can be particularly seen from figure 14.

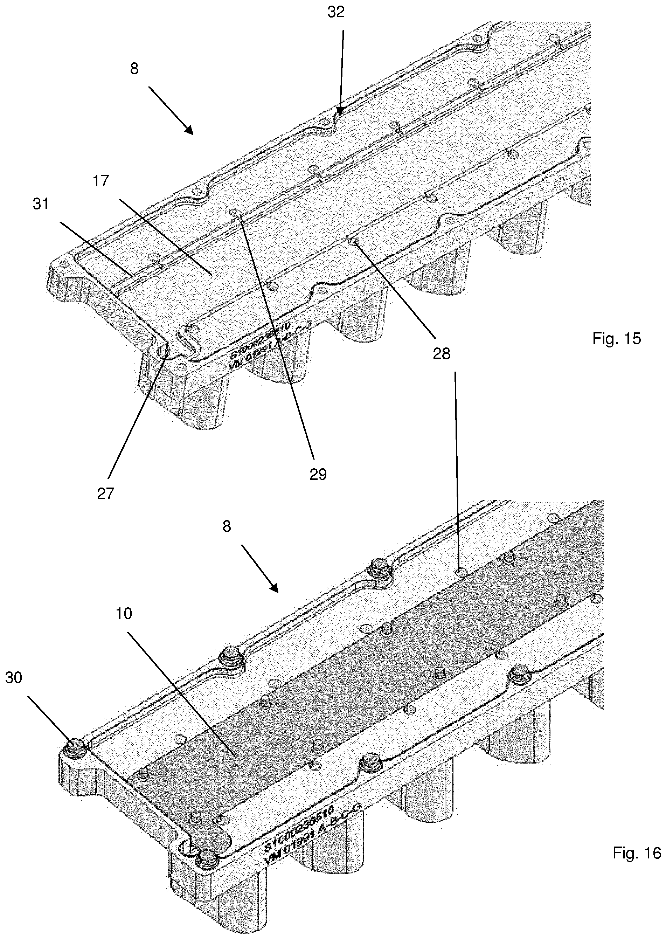

Figure 14 shows details of this base 9. The fluid inlet 27 is fluidly connected to a channel 17 to which liquid is supplied, particularly a cleaning liquid, fills this channel 17. The liquid is preferably injected below the cover plate 10 (please compare Figure 16) right into channel 17. As soon as a certain liquid level has been reached, the fluid flows via the fluid connection 29 between the channel 17 and the channel 28, here the air supply 28, and from there through channel 28 into the knock-out cups. Hence, the cleaning liquid cleans all parts of the knock out unit. The channel 17 is covered by a cover plate 10, as depicted in Figure 16, in order to separate the air supply from the liquid supply. As can be seen from figure 15, the contact area 31 between the base and this cover plate is designed as small as possible in order to avoid blind spots during cleaning. Furthermore, from figure 15 it can be seen, that all edges in the base plate 8 are rounded in order to improve cleaning of the base as exemplary depicted by reference sign 32.

Figure 16 shows the cover plate 10, which covers channel 17 and thus separates the air from the liquid supply. Air is supplied via hose 4 above the cover plate 10 and is then distributed into channels 28 and from there guided to the individual know-out cups.

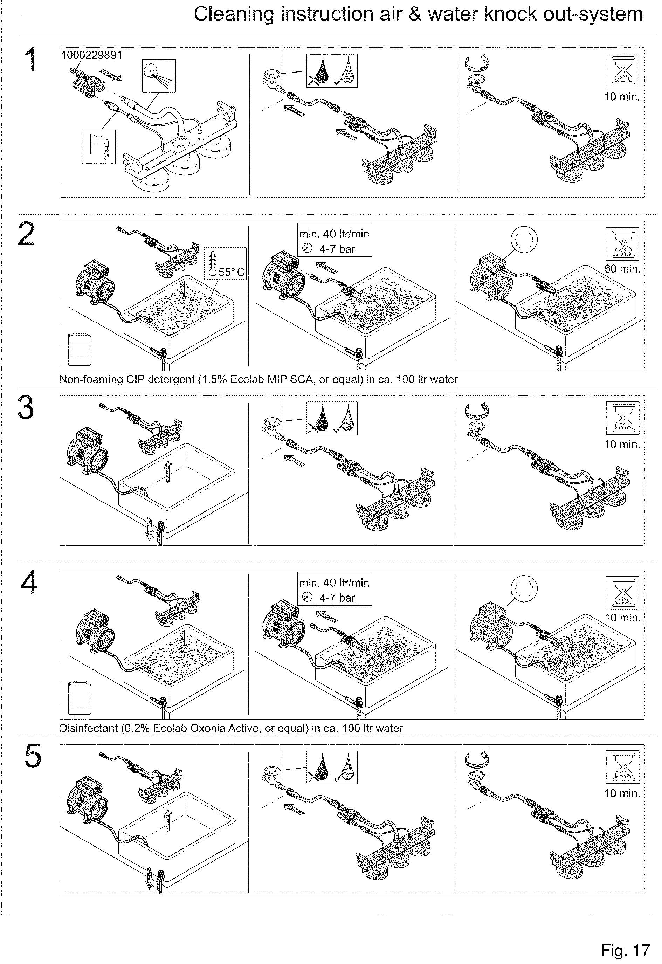

Figure 17 depicts the cleaning procedure of the inventive knock-out unit. Firstly, the fluid supply 3 and the gas supply 4 are both connected to adapter 25 and this adapter is then connected to a cleaning fluid supply, preferably water, which in the first step rinses the knock-out unit 1, particularly the knock-out cups 2 and thus assures that all coarse debris is removed from the knock-out unit. In a second step, the knock-out unit is submerged in a bath with a cleaning fluid which preferably comprises a CIP detergent and the air and fluid hose 3, 4 are now connected to a pump which sucks the cleaning fluid through the knock-out cups via the base into hoses 3, 4 and then recycles the cleaning water to the bath. In a third step, the knock-out unit is again connected to a water supply and subsequently rinsed for a certain period of time. As a last step, the knock-out unit is submerged into a disinfectant bath and the same procedure as described according to process step two is carried out. In a final step, the knock-out unit is rinsed with, for example, air so that all detergent is removed from the knock-out unit and the knock-out unit is dried.

### List of reference signs:

- 1: knock-out unit
- 2: knock-out cup
- 2.1: inner member
- 2.2: outer member
- 3: liquid supply, water supply
- 4: gas supply, air supply
- 5: locking/lifting means
- 5.1: lever
- 5.2: excentric connection
- 6: safety means, safety pin
- 6.1: cam
- 7: frame
- 7.1: slide-in profile
- 8: base, base plate
- 9: form-fit means, pin
- 10: cover means, cover plate
- 10.1: distribution holes
- 11: seal
- 12: distribution member for the gas, air diffusion plate
- 13: stamp
- 14: fixation means, fixation pin
- 15: fixation means, spring clip
- 16: positioning means
- 17: liquid channel for the liquid, cleaning channel
- 18: gap
- 19: form-fit means, groove
- 20: liquid inlet
- 21: positioning means for the inner member
- 22: gas/liquid mixing zone
- 23: air inlet frame
- 24: air inlet outer member 2.2
- 25: adapter, plug
- 26: fastening means
- 27: liquid inlet in the distribution plate
- 28: channel in the base 8
- 29: fluid connection between channels 17 and 28
- 30: flanged bolts
- 31: contact area between base 8 and cover 10
- 32: rounded edges

## Claims

1. Knock-out unit (1) with a multitude of knock-out cups (2), which are connected to a base (8), wherein the knock-out unit (1) comprises a fluid supply (3) for a cleaning fluid and means (17, 18) to guide the cleaning fluid to and through the knock-out cups (2), wherein the base (8) comprises at least one fluid channel (17) to guide the cleaning fluid from the supply (3) to the knock-out cups (2) and wherein the knock-out unit (1) comprises a gas supply (4), **characterized in that** the base comprises a channel to guide the gas from the supply to each knock-out cup, wherein the gas channel is at least partially separated from the fluid channel and wherein the gas- and fluid flow are combined in a mixing zone which is upstream from the knock out cups and wherein the knock-out unit comprises a cover plate (10) which covers the at least one fluid channel (17).

2. Knock-out unit (1) according to claim 1, **characterized in that** the diameter of the channel (17) comprises rounded edges and/or no blind hole.

3. Knock-out unit (1) according to one of the preceding claims, **characterized in that** it comprises a frame (7) and that the base (8) is slid into the frame (7).

4. Knock-out unit (1) according to claim 3, **characterized in that** the frame (7) and the base (8) comprise form-fit means (6, 19) respectively to avoid disorientation of the base (8) relative to the frame (7).

5. Knock-out unit (1) according to one of the preceding claims, **characterized in that** the knock-out cups (2) are fastened to the base (8) by a spring means (15).

6. Method to clean a knock out unit (1) according to claim 1, **characterized in that** the cleaning fluid is mixed with a gas in a mixing zone to produce foam.

7. Method according to claim 6, **characterized in, that** it comprises a gas/liquid mixing zone in which the cleaning fluid is mixed with the gas.

## Patentansprüche

1. Knock-out-Einheit (1) mit einer Vielzahl von Knock-out-Schalen (2), die mit einer Basis (8) verbunden sind, wobei die Knock-out-Einheit (1) eine Fluidversorgung (3) für ein Reinigungsfluid und Mittel (17, 18) zum Führen des Reinigungsfluids zu den und durch die Knock-out-Schalen (2) umfasst, wobei die Basis (8) mindestens einen Fluidkanal (17) zum Führen des Reinigungsfluids von der Versorgung (3) zu den Knock-out-Schalen (2) umfasst, und wobei die Knock-out-Einheit (1) eine Gasversorgung (4) umfasst, **dadurch gekennzeichnet, dass** die Basis einen Kanal umfasst, um das Gas von der Versorgung zu jeder Knock-out-Schale zu führen, wobei der Gaskanal mindestens teilweise von dem Fluidkanal getrennt ist und wobei der Gas- und Fluidstrom in einer Mischungszone kombiniert werden, die den Knock-out-Schalen vorgelagert ist, und wobei die Knock-out-Einheit eine Abdeckplatte (10) umfasst, die den mindestens einen Fluidkanal (17) abdeckt.

2. Knock-out-Einheit (1) nach Anspruch 1, **dadurch gekennzeichnet, dass** der Durchmesser des Kanals (17) abgerundete Kanten und/oder kein Blindloch umfasst.

3. Knock-out-Einheit (1) nach einem der vorangehenden Ansprüche, **dadurch gekennzeichnet, dass** sie einen Rahmen (7) umfasst und dass die Basis (8) in den Rahmen (7) geschoben ist.

4. Knock-out-Einheit (1) nach Anspruch 3,
**dadurch gekennzeichnet, dass** der Rahmen (7) und die Basis (8) formschlüssige Mittel (6, 19) umfassen, die jeweils eine Fehlausrichtung der Basis (8) relativ zu dem Rahmen (7) vermeiden sollen.

5. Knock-out-Einheit (1) nach einem der vorangehenden Ansprüche, **dadurch gekennzeichnet, dass** die Knock-out-Schalen (2) durch ein Federmittel (15) an der Basis (8) befestigt sind.

6. Verfahren zum Reinigen einer Knock-out-Einheit (1) nach Anspruch 1, **dadurch gekennzeichnet, dass** das Reinigungsfluid in einer Mischungszone mit einem Gas gemischt wird, um Schaum zu produzieren.

7. Verfahren nach Anspruch 6, **dadurch gekennzeichnet, dass** es eine Gas/Flüssigkeit-Mischungszone umfasst, in der das Reinigungsfluid mit dem Gas gemischt wird.

## Revendications

1. Unité de décochage (1) ayant une multitude de coupes de décochage (2) qui sont reliée à une base (8), l'unité de décochage (1) comprenant une alimentation en fluide (3) pour un fluide de nettoyage et des moyens (17, 18) pour guider le fluide de nettoyage vers les coupes de décochage (2), et à travers ces dernières, dans laquelle
la base (8) comprend au moins un canal de fluide (17) pour guider le fluide de nettoyage depuis l'alimentation (3) vers les coupes de décochage (2) et l'unité de décochage (1) comprenant une alimentation en gaz (4), **caractérisée en ce que** la base comprend un canal pour guider le gaz depuis l'alimentation jusqu'à chaque coupe de décochage, le canal de gaz étant au moins partiellement séparé du canal de fluide et l'écoulement de gaz et l'écoulement de fluide étant combinés dans une zone de mélange qui se trouve en amont des coupes de décochage et l'unité de décochage comprenant une plaque de recouvrement (10) qui recouvre le ou les canaux de fluide (17).

2. Unité de décochage (1) selon la revendication 1, **caractérisée en ce que** le diamètre du canal (17) comprend des bords arrondis et/ou ne comprend aucun trou borgne.

3. Unité de décochage (1) selon l'une des revendications précédentes, **caractérisée en ce qu'**elle comprend un cadre (7) et **en ce que** la base (8) est glissée dans le cadre (7).

4. Unité de décochage (1) selon la revendication 3, **caractérisée en ce que** le cadre (7) et la base (8) comprennent des moyens de complémentarité de forme (6, 19) respectivement pour éviter une désorientation de la base (8) par rapport au cadre (7).

5. Unité de décochage (1) selon l'une des revendications précédentes, **caractérisée en ce que** les coupes de décochage (2) sont fixées à la base (8) par un moyen formant ressort (15).

6. Procédé pour nettoyer une unité de décochage (1) selon la revendication 1, **caractérisé en ce que** le fluide de nettoyage est mélangé avec un gaz dans une zone de mélange pour produire de la mousse.

7. Procédé selon la revendication 6, **caractérisé en ce qu'**il comprend une zone de mélange de gaz/liquide dans laquelle le fluide de nettoyage est mélangé avec le gaz.
